# EUROPEAN PATENT SPECIFICATION

(11) **EP 0 621 429 B1**
(45) Date of publication and mention of the grant of the patent: **12.07.2000**
(21) Application number: 94201107.3
(22) Date of filing: 21.04.1994
(51) Int. Cl.: F16L 17/10, F16J 15/46

(54) **Sealing element**
Dichtelement
Elément d'étanchéité

(30) Priority: 23.04.1993 NL 9300699
(43) Date of publication of application: 26.10.1994
(73) Proprietor: Tetra Laval Holdings & Finance S.A., 1009 Pully (CH)
(72) Inventor: Schouten, Frank, NL-8435 WR Donkerbroek (NL)
(74) Representative: Vossen, Johan A.M.J.H.

(56) References cited:
- EP-A- 0 220 336
- EP-A- 0 340 385
- DE-A- 1 918 804

## Description

The invention relates to a whey draining apparatus for draining whey from a whey/curd mass, said apparatus comprising at least one column including an inner tubular element disposed in an outer tubular element and at least one sealing element for forming a liquid-tight seal between the two tubular elements, said sealing element at least comprising an endless element of flexible material which interacts with one of the tubular elements and of which at least a part of the periphery can be moved in such a way under the influence of a pressure medium that it rests against the other tubular element and provides a seal, wherein said endless element of flexible material is connected to positioning means fixed to the inner tubular element.

Such a whey draining apparatus is known from practice.

In the preparation of cheese, a whey/curd mass produced following the addition of enzymes and a starter (bacterial culture of lactic acid) to milk is guided through a drainage apparatus, in order to remove whey from the mass. Such an apparatus comprises one or more moulding pipes which are made up of an inner and an outer column. The space between these columns is divided by partitions into several chambers which are separated from each other by means of sealing elements. The chambers thus formed, called counterpressure chambers, are connected to riser pipes for removing whey from the whey/curd mass. These counter pressure chambers combined with the riser pipes regulate the removal of whey by building up a counter pressure.

In the known apparatus such a sealing element is situated on the inside wall of the outer column. The positioning means comprise a flange which is provided on its inner periphery with a groove. An inflatable rubber band or hose is placed in the groove. The band, which has a special profile and a special shape, is situated in a press fit in the groove of the flange. The flange is provided with a supply pipe for a pressure medium, in particular air. This supply pipe is permanently fixed to the rubber band. The band can be inflated by supplying the medium through this pipe. When the band is inflated, it expands and moves slightly out of the groove, thereby coming into contact with a flange placed on the inner column, in order to form a liquid-tight seal between the two columns.

The band or hose must have a special profile and a special shape, because while is it being inflated only the inner periphery of the band can move. The outer periphery is held in place by the groove of the flange.

The special shape and the special profile of the band make it expensive to manufacture. In addition, this band has the disadvantage that it has to be manufactured specially and very accurately and has a long delivery time. Another disadvantage of this band is that it is not easily replaced. The costs involved in using this known sealing element are therefore high.

Another disadvantage is that air is used as the pressure medium. If there is a leak, this air can come into contact with the whey, which is undesirable from the point of view of hygiene and also in terms of economics, because the whey then turns sour, and the market value of sour whey is low. If there is a leak, air can also reach the curd mass, which is equally undesirable.

The object of the invention is to provide a whey draining apparatus including at least one sealing element which is simple and cheap to manufacture.

Another object of the invention is to provide a whey draining apparatus including a sealing element in which no compressed gaseous medium needs to be used.

Yet another object is to provide a whey draining apparatus including a sealing element which is easily removed and replaced, without the need for auxiliary tools.

A whey draining apparatus according to the invention is characterized in that
the positioning means are in the form of a flange which is fixed to and around the inner tubular element and extends into the annular space between the inner and outer tubular elements, and which is provided at its outer periphery with a groove which accommodates, in a sealing manner, the endless element of flexible material and wherein at the inside of the groove one or more supply apertures for a pressure medium are present.

According to the invention the at least one sealing element is situated on the inner column, which is removable, with the result that an easily accessible construction is obtained. When the pressure medium is supplied, it will fill the space in the groove behind the endless sealing element of flexible material and spread there. Since the element fits exactly into the groove and seals the groove, the medium in the space behind the element will build up a pressure, with the result that the element moves outwards. The element is then pressed against the outer column, in order to form a liquid-tight seal between the inner and the outer column.

An apparatus according to the invention has the advantage that the sealing element(s) can be made of materials which are commercially available. In addition, the endless element is simple to manufacture, for example by cutting it off straight at the desired length and joining the two ends to each other by welding or gluing or in some other suitable way. The manufacturing costs of this element are therefore low compared with those of the known inflatable band.

The removal and replacement of the sealing element are also very simple and can be carried out without auxiliary tools.

If, in the absence of compressed medium, the outside of the groove and of the periphery of the element lie in roughly the same cylindrical plane, the seal can be achieved advantageously through the fact that the movement of the element under the influence of the compressed medium is less than half the width of the element.

In a preferred embodiment the sealing element is of annular shape, which means that the space filled with pressure medium in the groove behind the element is the same size all over, and uniform pressure can thus be built up by this medium and exerted on the element.

The element is preferably made of rubber or an elastic plastics, material because the endless element can then easily be fixed in a slightly wedged fit sealing the groove; a suitable material is neoprene rubber.

From the point of view of hygiene, the element is preferably of a solid construction.

In another embodiment, the cross-section of the element when not under pressure is preferably round, so that the element seals the groove well. Other shapes such as square or rectangular are equally possible, if the condition that the groove should be well sealed is met.

In another possible embodiment of the invention, the sealing element is mounted under pretension in the groove, so the element lies fully in the groove when not under the influence of the pressure medium. In this way the inner column is easily removed from the outer column.

With the same object, the apparatus according to the invention can also be designed in such a way that when the sealing element is in the non-sealing position, the element lies fully in the groove, under the influence of the pressure medium having a sub-atmospheric pressure. In this way the medium exerts a suction force on the element, so the element is sucked into the groove.

In another embodiment, the supply means for the compressed medium are suitable for supplying liquid medium, preferably suitable for supplying water. In the event of leaks, water causes no damage to the products, unlike air which does have a damaging effect on the whey and the curd.

In order to ensure an even better seal, the positioning means preferably do not include a flange on the outer element of the tubular elements. In this case the inside wall of the outer element of the tubular elements is flush. In the sealing position the element will deform slightly through the pressure applied by the compressed medium, with the result that the contact surface of said element with the inside wall of the outer element is increased. If the inside wall of the outer element of the tubular elements is flush, the inner element is easily placed in the outer element, because the sealing element on the inner element does not have to be positioned relative to a flange on the outer element, as is the case with the known sealing element.

The positioning means can also comprise discharge means for the pressure medium. In this way the pressure medium can easily be discharged in the non-activated state of the sealing element. It is also possible in this way to circulate cleaning fluid behind the element, for cleaning the element and the space behind it. The fact that the sealing element is easily removable also makes satisfactory cleaning from the outside possible.

Although, in the case of the prior art design, a seal is fitted once on the fixed outer column, and, in the case of the device according to the invention, a seal is fitted the same number of times on the inner column as there are inner columns, the design of the sealing elements is so much simpler and the parts thereof are so much cheaper that with an average number of inner columns per device (two to three) the cost per device is halved. Three to four sealing elements are required per inner column.

It is observed that DE-A-1 918 804 discloses a sealing device sealing an axle in a bore in a machine case. This prior sealing device comprises an annular element placed in an annular groove in the wall of the bore. The annular element may be compressed to engage the axle placed in the bore.

EP-A-0 220 336 discloses a sealing element to be used for sealing and connecting two gas tubes. Again this prior sealing element is not mounted to the inner element but to the outer element.

The invention is explained in greater detail with reference to the appended drawings, in which:
Fig. 1 shows a sealing element according to the prior art;
Fig. 2 is a sealing element according to an embodiment of the invention.

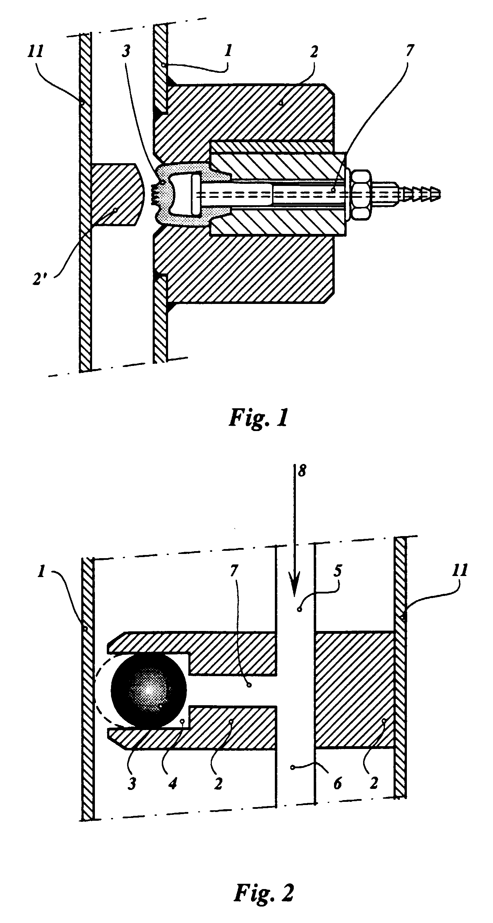

Fig. 1 is a diagrammatic representation of the sealing element according to the prior art. This sealing element is fitted on the outer column 1, and consists of a flange 2. In the flange 2 there is a hollow inflatable band 3, which is connected to means 7 for the supply of air. When the hollow band 3 is inflated by way of the means 7 for the supply of air, the inner periphery of the band 3 moves outwards and comes into contact with the flange 2' on the inner column 11, in order to form a seal between the two columns 1 and 11. This figure shows clearly the special profile and the special shape of the band 3.

Fig. 2 is a diagrammatic representation of the sealing element according to an embodiment of the invention, in which parts which are identical to the parts of the device shown in Fig. 1 are indicated by the same reference numbers.

The sealing element consists of a flange 2 disposed on the inner column 11, which is provided with a groove 4 on its periphery. The groove 4 accommodates the endless element 3, which flange is fitted in a slightly wedged fit and in a sealing manner in the groove 4. The space behind the endless element 3 of the groove 4 is in communication with the means 5, 6, 7 for supplying a compressed medium 8. Supplying the compressed medium 8 by way of the supply means 5, 6, 7 provided for the purpose causes the space behind the element 3 in the groove 4 to be filled. The element 3 moves outwards under the influence of the compressed medium 8 and comes into contact with the flat wall of the outer column 1. The position of the element 3 when it is in the extended position under the influence of the compressed medium 8 is indicated by a dotted line in this figure. The element 3 is deformed slightly at the place where it comes into contact with the flat inside wall of the outer column 1, with the result that the contact surface is increased.

## Claims

1. A whey draining apparatus for draining whey from a whey/curd mass, said apparatus comprising at least one column including an inner tubular element (11) disposed in an outer tubular element (1) and at least one sealing element for forming a liquid-tight seal between the two tubular elements (1,11), said sealing element (2,3) at least comprising an endless element (3) of flexible material which interacts with one of the tubular elements (1,11) and of which at least a part of the periphery can be moved in such a way under the influence of a pressure medium (8) that it rests against the other tubular element and provides a seal, wherein said endless element (3) of flexible material is connected to positioning means (2) fixed to the inner tubular element, **characterized in that** the positioning means (2) are in the form of a flange which is fixed to and around the inner tubular element (11) and extends into the annular space (39) between the inner and outer tubular elements, and which is provided at its outer periphery with a groove (4) which accommodates, in a sealing manner, the endless element (3) of flexible material and wherein at the inside of the groove (4) one or more supply apertures (7) for pressure medium (8) are present.

2. A whey draining apparatus according to claim 1, **characterized in that** the movement of the endless element (3) under the influence of the pressure medium (8) is less than half the width of the endless element (3).

3. A whey draining apparatus according to claim 1 or 2, **characterized in that** the endless element (3) has an annular shape.

4. A whey draining apparatus according to one of claims 1 to 3, **characterized in that** the endless element (3) is made of rubber or an elastic plastic.

5. A whey draining apparatus according to any one of claims 1 to 4, **characterized in that** the endless element (3) is made of solid material.

6. A whey draining apparatus according to any one of claims 1 to 5, **characterized in that** the cross-section of the endless element (3) when not under pressure is round.

7. A whey draining apparatus according to any one of claims 1 to 6, **characterized in that** the endless element (3) is mounted under pretension in the groove (4), such that the endless element lies fully in the groove (4) when not under the influence of the pressure medium (8).

8. A whey draining apparatus according to any one of claims 1 to 6, **characterized in that** when in the non-sealing position, the endless element (3) lies fully in the groove (4), under the influence of the presure medium (8), which is under sub-atmospheric pressure.

9. A whey draining apparatus according to any one of claims 1-8, **characterized by** supply means (5, 6, 7) for a pressure medium, said supply means including at least one duct (5) connected to the supply apertures (7).

10. A whey draining apparatus according to claim 9, **characterized in that** the supply means (5, 6, 7) for the pressure medium (8) are arranged for supplying in use a liquid pressure medium.

11. A whey draining apparatus according to claim 9 or 10, **characterized in that** the supply means (5, 6, 7) are suitable for supplying water.

12. A whey draining apparatus according to any one of claims 1 to 11, **characterized in that** the positioning means (2) also have discharge means for the pressure medium.

13. A whey draining apparatus according to any one of claims 1-12, **characterized in that** at least one hose or line for a pressure medium is mounted in the space between the inner and outer tubular elements and is connected to at least one sealing element.

## Patentansprüche

1. Molke-Abzugsvorrichtung zum Abziehen von Molke aus einer Molke-Quarkmasse, mit einer Säule mit einem Innenrohrelement (11), das in einem Außenrohrelement (1) angeordnet ist, und mindestens einem Dichtelement zum Bilden einer flüssigkeitsdichten Abdichtung zwischen den beiden Rohrelementen (1,11), wobei das Dichtelement (2,3) mit mindestens einem Endloselement (3) aus elastischem Material versehen ist, welches mit einem der Rohrelemente (1,11) interagiert und von dem mindestens ein Teil der Peripherie durch Einwirkung eines Druckmediums (8) derart bewegt werden kann, dass es an dem anderen Rohrelement anliegt und eine Dichtung bildet, wobei das Endloselement (3) aus elastischem Material mit einer an dem Innenrohrelement befestigten Positioniereinrichtung (2) verbunden ist,
**dadurch gekennzeichnet**, **dass**
die Positioniereinrichtung (2) die Form eines Flansches hat, der an und um das Innenrohrelement (11) angebracht ist und sich in den Ringraum (39) zwischen dem Innen- und dem Außenrohrelement erstreckt und der an seiner Außenperipherie eine Nut (4) aufweist, die das Endloselement (3) aus elastischem Material dichtend aufnimmt, und dass auf der Innenseite der Nut (4) eine oder mehrere Zuführöffnungen (7) für das Druckmedium (8) vorgesehen sind.

2. Molke-Abzugsvorrichtung nach Anspruch 1, dadurch gekennzeichnet, dass die Bewegung des Endloselements (3) durch Einwirkung des Druckmediums (8) weniger als die halbe Breite des Endloselements beträgt.

3. Molke-Abzugsvorrichtung nach Anspruch 1 oder 2, dadurch gekennzeichnet, dass das Endloselement (3) ringförmig ausgeführt ist.

4. Molke-Abzugsvorrichtung nach einen der Ansprüche 1-3, dadurch gekennzeichnet, dass das Endloselement (3) aus Gummi oder einem elastischen Kunststoff besteht.

5. Molke-Abzugsvorrichtung nach einem der Ansprüche 1-4, dadurch gekennzeichnet, dass das Endloselement (3) aus festem Material besteht.

6. Molke-Abzugsvorrichtung nach einem der Ansprüche 1-5, dadurch gekennzeichnet, dass der Querschnitt des nicht druckbeaufschlagten Endloselements (3) rund ist.

7. Molke-Abzugsvorrichtung nach einem der Ansprüche 1-6, dadurch gekennzeichnet, dass das Endloselement (3) unter Vorspannung derart in die Nut (4) eingesetzt wird, dass das Endloselement vollständig in der Nut (4) liegt, wenn es nicht von dem Druckmedium (8) beaufschlagt wird.

8. Molke-Abzugsvorrichtung nach einem der Ansprüche 1-6, dadurch gekennzeichnet, dass das Endloselement (3) in nicht dichtender Position durch die Einwirkung des Druckmediums (8), dessen Druck unter dem atmosphärischen Druck liegt, vollständig in der Nut (4) liegt.

9. Molke-Abzugsvorrichtung nach einem der Ansprüche 1-8, gekennzeichnet durch eine Zuführeinrichtung (5,6,7) für ein Druckmedium, die mindestens einen mit den Zuführöffnungen (7) verbundenen Kanal (5) aufweist.

10. Molke-Abzugsvorrichtung nach Anspruch 9, dadurch gekennzeichnet, dass die Zuführeinrichtung (5,6,7) für das Druckmedium (8) zum Zuführen eines flüssigen Druckmediums während des Betriebs vorgesehen ist.

11. Molke-Abzugsvorrichtung nach Anspruch 9 oder 10, dadurch gekennzeichnet, dass die Zuführeinrichtung (5,6,7) zum Zuführen von Wasser geeignet ist.

12. Molke-Abzugsvorrichtung nach einem der Ansprüche 1-11, dadurch gekennzeichnet, dass die Positioniereinrichtung (2) auch eine Ablassvorrichtung für das Druckmedium aufweist.

13. Molke-Abzugsvorrichtung nach einem der Ansprüche 1-12, dadurch gekennzeichnet, dass mindestens ein Schlauch oder eine Leitung für ein Druckmedium in dem Raum zwischen dem Innen- und dem Außenrohrelement montiert und mit mindestens einem Dichtelement verbunden ist.

## Revendications

1. Appareil d'évacuation de petit-lait destiné à évacuer du petit-lait d'une masse petit-lait/lait caillé, ledit appareil comportant au moins une colonne comprenant un élément tubulaire interne (11) disposé dans un élément tubulaire externe (1) et au moins un élément d'étanchéité destiné à former un joint étanche au liquide entre les deux éléments tubulaires (1, 11), ledit élément d'étanchéité (2, 3) au moins comportant un élément sans fin (3) en matière flexible qui interagit avec un des éléments tubulaires (1, 11) et dont au moins une partie de la périphérie peut être déplacée d'une manière telle sous l'influence d'un fluide sous pression (8) qu'il repose contre l'autre élément tubulaire et assure une étanchéité, ledit élément sans fin (3) en matière flexible étant relié à des moyens de positionnement (2) fixés sur l'élément tubulaire interne, caractérisé en ce que les moyens do positionnement (2) sont sous la forme d'une bride qui est fixée sur et autour de l'élément tubulaire interne (11) et s'étend dans l'espace annulaire (39) entre les éléments tubulaires interne et externe, et qui est pourvue au niveau de sa périphérie externe d'une rainure (4) qui reçoit, d'une manière étanche, l'élément sans fin (3) en matière flexible et où, à l'intérieur de la rainure (4), une ou plusieurs ouvertures d'alimentation (7) pour le fluide sous pression (8) sont présentes.

2. Appareil d'évacuation de petit-lait selon la revendication 1, caractérisé on ce que le mouvement de l'élément sans fin (3) sous l'influence du fluide sous pression (8) est inférieur à la moitié de la largeur de l'élément sans fin (3).

3. Appareil d'évacuation de petit-lait selon la revendication 1 ou 2, caractérisé en ce que l'élément sans fin (3) a une forme annulaire.

4. Appareil d'évacuation de petit-lait selon l'une des revendications 1 à 3, caractérisé en ce que l'élément sans fin (3) est fabriqué en caoutchouc au en matière plastique.

5. Appareil d'évacuation de petit-lait selon l'une quelconque des revendications 1 à 4, caractérisé en ce que l'élément sans fin (3) est fabriqué en matière pleine.

6. Appareil d'évacuation de petit-lait selon l'une quelconque des revendications 1 à 5, caractérisé en ce que la section de l'élément sans fin (3) lorsqu'il n'est pas sous pression est ronde.

7. Appareil d'évacuation de petit-lait selon l'une quelconque des revendications 1 à 6, caractérisé en ce que l'élément sans fin (3) est monté sous pré-tension dans la rainure (4), de telle sorte que l'élément sans fin s'étend totalement dans la rainure (4) lorsqu'il n'est pas sous l'influence du fluide sous pression (8).

8. Appareil d'évacuation de petit-lait selon l'une quelconque des revendications 1 à 6, caractérisé en ce que, lorsqu'il est dans la position sans étanchéité, l'élément sans fin (3) s'étend totalement dans la rainure (4), sous l'influence du fluide sous pression (8), qui est sous une pression en dessous de l'atmosphère.

9. Appareil d'évacuation de petit-lait selon l'une quelconque des revendications 1 à 8, caractérisé par des moyens d'alimentation (5, 6, 7) pour un fluide sous pression, lesdits moyens d'alimentation comprenant au moins une conduite (5) reliée aux ouvertures d'alimentation (7).

10. Appareil d'évacuation de petit-lait selon la revendication 9, caractérisé en ce que les moyens d'alimentation (5, 6, 7) pour le fluide sous pression (8) sont prévus pour délivrer lors de l'utilisation un fluide sous pression liquide.

11. Appareil d'évacuation de petit-lait selon la revendication 9 ou 10, caractérisé on ce que les moyens d'alimentation (5, 6, 7) sont adaptés à l'alimentation en eau.

12. Appareil d'évacuation de petit-lait selon l'une quelconque des revendications 1 à 11, caractérisé en ce que les moyens de positionnement (2) possèdent également des moyens de refoulement pour le fluide sous pression.

13. Appareil d'évacuation de petit-lait selon l'une quelconque des revendications 1 à 12, caractérisé en ce qu'au moins un tuyau ou une conduite pour un fluide sous pression est monté dans l'espace entre les éléments tubulaires interne et externe et est relié à au moins un élément d'étanchéité.
